Europäisches Patentamt

(19) European Patent Office

Office européen des brevets

(11) Publication number: **0 044 742**
**B1**

(12) **EUROPEAN PATENT SPECIFICATION**

(45) Date of publication of patent specification: **25.11.87**

(21) Application number: **81303331.3**

(22) Date of filing: **21.07.81**

(51) Int. Cl.⁴: **H 01 G 4/06, H 01 G 4/30**

(54) **Capacitor element.**

(30) Priority: **21.07.80 JP 99684/80**

(43) Date of publication of application:
**27.01.82 Bulletin 82/04**

(45) Publication of the grant of the patent:
**25.11.87 Bulletin 87/48**

(84) Designated Contracting States:
**DE FR GB IT NL SE**

(56) References cited:
**GB-A-1 469 944**
**US-A-3 465 267**

(73) Proprietor: **FUJITSU LIMITED**
**1015, Kamikodanaka Nakahara-ku**
**Kawasaki-shi Kanagawa 211 (JP)**

(72) Inventor: **Hirano, Yutaka**
**13-16, Oji 2-chome**
**Atsugi-shi Kanagawa 243 (JP)**
Inventor: **Hayakawa, Masahiro**
**6-7-408, Higashishinagawa 4-chome**
**Sinagawa-ku Tokyo 140 (JP)**
Inventor: **Ashida, Hideo**
**51-1, Kozukue-cho Kohoku-ku**
**Yokohama-shi Kanagawa 222 (JP)**
Inventor: **Ikuta, Hideki**
**847-10, Kamikodanaka Nakahara-ku**
**Kawasaki-shi Kanagawa 211 (JP)**

(74) Representative: **Abbott, Leonard Charles et al**
**GILL JENNINGS & EVERY 53-64 Chancery Lane**
**London WC2A 1HN (GB)**

Courier Press, Leamington Spa, England.

## Description

This invention relates to a capacitor element, and more particularly to a capacitor having parallel plates with a side length of more than about one fourth of a wavelength of a signal used in a microwave integrated circuit.

In conventional microwave circuits, distributed element circuits or lumped element circuits may be used. In a distributed element circuit, parameters such as resistance, inductance and capacitance are distributed as in a transmission line where the capacitance exists between the conductors, and the resistance and inductance are due to the conductors themselves. In contrast, in a lumped element circuit, these parameters are lumped as used in a gate or source circuit of a GaAs FET, in which, the capacitance exists between a conductor and the ground, and these parameters can be treated for circuit analysis as a single inductance, capacitance, resistance, etc., when the frequency is sufficiently low. However, when the frequency used in a lumped element circuit is very high, especially when the size of the electrode of the capacitor reaches or exceeds about one quarter of the wavelength, we have to consider the effect of size on reactance, that is to say, the change of reactance of the capacitor from capacitive reactance to inductive reactance. Therefore, the lumped element circuit, when used in such a high frequency, behaves as a distributed element circuit, and, accordingly, the designed values of the parameters become different from the practical values, as will be explained hereinafter in detail.

Accordingly, an object of the present invention is to provide a capacitor element, the reactance of which does not change to an extremely large inductive reactance even when the used frequency becomes so high that the size of the electrode of the capacitor element reaches or exceeds about one quarter of the wavelength.

Another object of the present invention is to provide a capacitor element which can be used in a lumped element circuit of a microwave circuit without deterioration of the characteristic of the lumped element circuit.

A capacitor element according to the invention for microwave signals comprises a dielectric layer having two main surfaces, an electrode on one of the main surfaces and a conductive layer on the other main surface, and including at least one conductive wire joining two points on the said electrode; characterised in that the electrode extends continuously and in a straight line between the two points joined by the wire, the wire being spaced from the electrode between the said two points and having a length less than $\lambda_0/2\sqrt{\varepsilon_r}$, where $\lambda_0$ is the minimum wavelength for received signals and $\varepsilon_r$ is the dielectric constant of the dielectric layer, whereby the tendency of the microwave capacitor to act as a transmission line is reduced.

It has been proposed, in GB—A—1 469 944, that to reduce undesirable resonances in planar thin-film capacitors of the interdigitated kind, spaced fingers of the same electrode are bridged by a conductive link, the link extending over the intermediate finger of the other electrode.

To enable the invention to be better understood, examples of prior circuit elements and an embodiment of the present invention will now be described with reference to the accompanying drawings, wherein:

Fig. 1 is a circuit diagram illustrating a lumped element circuit for explaining the problem in a conventional capacitor;

Fig. 2 is a general perspective view illustrating the structure of the circuit of Fig. 1 in an integrated circuit;

Fig. 3A is a partial plan view illustrating the structure of a known high-power self-biased GaAs FET;

Fig. 3B is a cross-sectional view taken along line III—III' of Fig. 3A;

Fig. 4 is an equivalent circuit diagram of the GaAs FET of Fig. 3A;

Fig. 5A is a plan view illustrating a capacitor used in the device of Fig. 3A and a measuring lead;

Fig. 5B is a cross-sectional view taken along line V—V' of Fig. 5A;

Fig. 6 is an equivalent circuit of the device of Fig. 5;

Fig. 7 is a graph illustrating the designed relation and the practical relation between the frequency and the reactance of the capacitor of Fig. 5;

Fig. 8 is a Smith chart for explaining the impedance of the capacitor of Fig. 5; and

Fig. 9 is a plan view illustrating a capacitor according to an embodiment of the present invention.

Fig. 10 is a graph illustrating the designed relation and the experimental relation between the frequency and the reactance of the capacitor of Fig. 9.

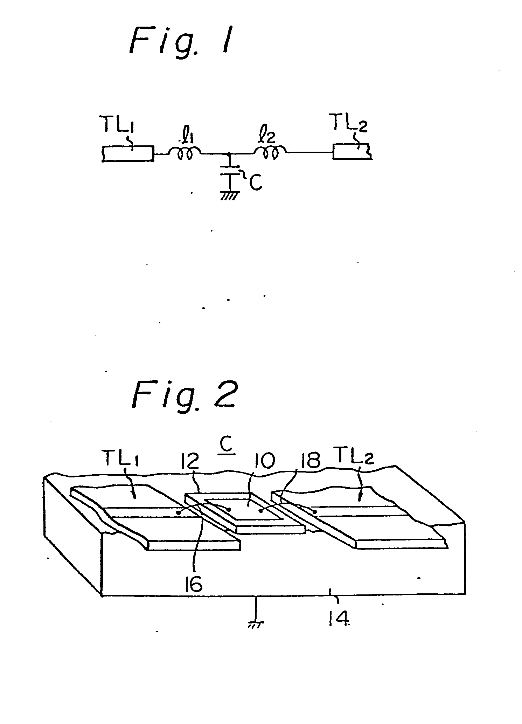

Before explaining a preferred embodiment of the present invention, the problems in the conventional capacitor will first be explained with reference to Figs. 1 through 7.

Fig. 1 is a conventional circuit diagram illustrating a lumped element circuit. In Fig. 1, two strip lines $TL_1$ and $TL_2$ are connected by inductances $l_1$ and $l_2$. One electrode of a capacitor C is connected at a connecting point between the inductances $l_1$ and $l_2$. The other electrode is grounded. The lumped constant circuit of Fig. 1 constitute a low-pass filter used in a microwave circuit.

In a microwave integrated circuit, the circuit of Fig. 1 is constructed as shown in Fig. 2, which is a general perspective view illustrating the structure of the circuit of Fig. 1. In Fig. 2, the capacitor C is constructed by an electrode plate 10, a conduction substrate 14 made of copper and connected to the ground, and a dielectric film 12 between the electrode plate 10 and the conduction substrate 14. The

inductances $l_1$ and $l_2$ are constituted by lead wires 16 and 18 which are connected between the electrode plate 10 and the strip lines $TL_1$ and $TL_2$, respectively.

When a conventional capacitor is used in a lumped element circuit of a microwave integrated circuit, the reactance of the circuit often tends to be different from that of the designed value. One of the reasons why the reactance is changed is that, when the wave length of the electric signal applied to the lumped element circuit is decreased to less than 4l, where l represents the side length of the electrode plate of the capacitor, the electrode plate acts as an inductance, or a transmission line, and does not act as the electrode of the capacitor.

This reason will be explained in detail in conjunction with a known high power GaAs FET used in microwaves. A transistor of this type is used in such a manner that a positive voltage is applied to its drain; its source is grounded; and a negative voltage is applied to its gate. However, by this connection, two power supplies are required. Therefore, the source is grounded through a parallel circuit comprising a resistor and a capacitor so as to form a so-called self-biased circuit in which the negative voltage is not required to be applied to the gate so that the transistor can be operated by a single power supply. The capacitor has as its function to ground the source by conducting alternating currents. However, when the frequency of the signal applied to the transistor is extremely high, inductances of lead wires connected to the capacitor can not be neglected. Accordingly, the positioning of the capacitors becomes an important problem.

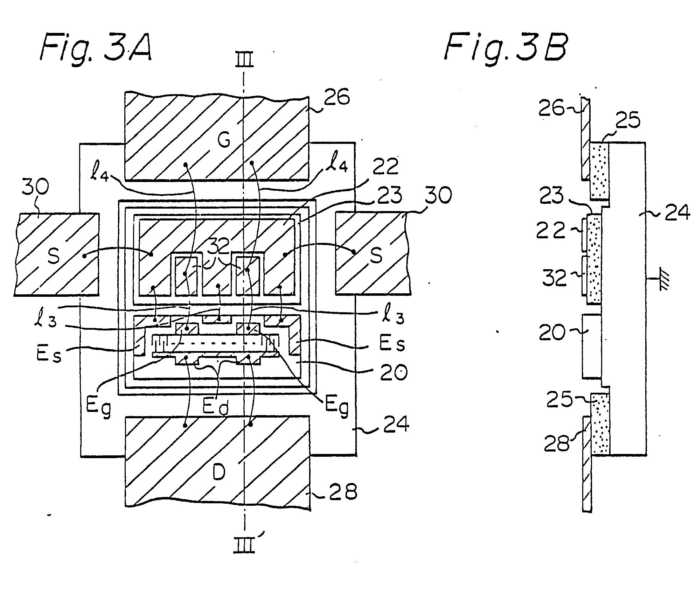

Fig. 3A is a partial plan view illustrating the structure of a high power self-biased GaAs FET which was disclosed in EP—A—0015709, published on September 1980, after the priority date of the present patent. Fig. 3B is a cross-sectional view taken along line III—III' of Fig. 3A. Referring to Figs. 3A and 3B, capacitors are arranged close to the transistor. That is, in these figures, 20 represents a semiconductor chip on which a GaAs FET is formed; 22 and 32 represent the electrode plates of the capacitors; and 24 represents a grounded conduction substrate made of copper. On the conduction substrate 24, the semiconductor chip 20 is formed. Also on the conduction substrate 24, a dielectric film 23 is formed. On the dielectric film 23, the electrode plates 22 and 32 are formed. A package lead wire 26 for the gate and a package lead wire 28 for the drain are formed on the conduction substrate 24 through an insulating film 25; 30 represents a package lead wire for the source. These lead wires are connected to the gate electrode Eg, the drain electrode Ed, and the source electrode Es of the semiconductor chip 20 by wire bonding as illustrated. The gate electrode and the drain electrode have interdigitated structures as illustrated for the purpose of lowering the resistances of the electrodes and thus obtaining high power. The electrode plates 32 form capacitors for input impedance matching.

The dielectric film 23 is made of, for example, barium titanate having a dielectric constant equal to about 140. The thickness of the dielectric film 23 is about 0.15 mm.

The electrode plate 22, 32 over the dielectric film 23 or an electrode plate under the dielectric film 23 (not shown) is formed by a titanium film having a thickness of about 1 μm covering the dielectric film 23, a palladium film having a thickness of about 1 μm covering the titanium film, and a gold film having a thickness of about 4 μm covering over palladium film. The capacitors are mounted on the conduction substrate by adhesive of, for example, gold-silicon alloy.

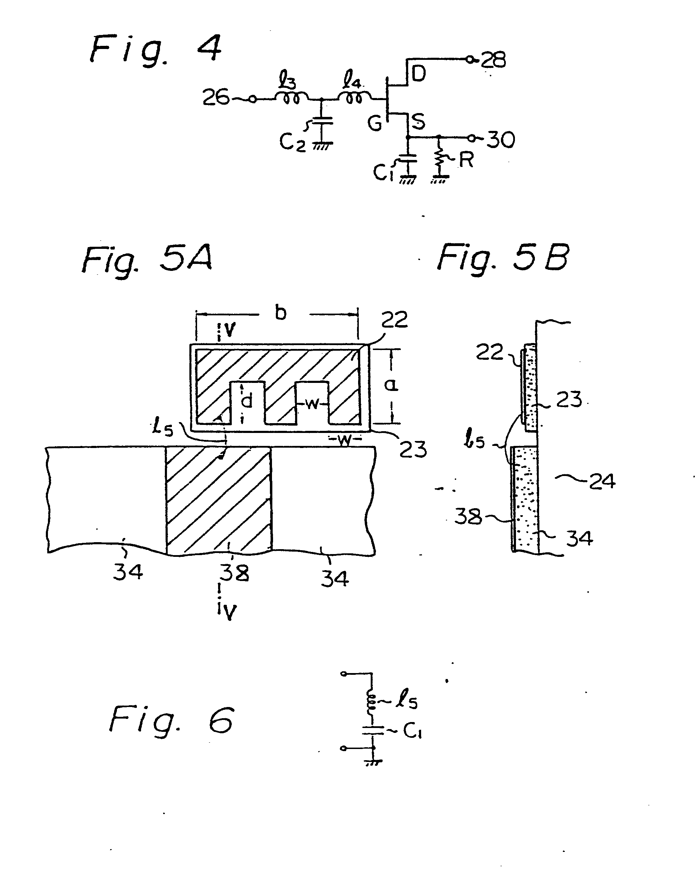

Fig. 4 is an equivalent circuit diagram of the GaAs FET of Fig. 3A. In Fig. 4, the gate electrode of the transistor is connected through inductances $l_3$ and $l_4$ to the package lead 26. One electrode of a capacitor $C_2$ for input impedance matching is connected at a connecting point between the inductances $l_3$ and $l_4$. The other electrode of the capacitor $C_2$ is grounded. The capacitor $C_2$ is formed by the electrode plates 32, the dielectric film 23 and the conduction substrate 24 in Figs. 3A and 3B. A capacitor $C_1$ for grounding high frequency components, or self biasing, is connected between the source electrode of the transistor and the ground. The capacitor $C_1$ is formed by the electrode plate 22, the dielectric film 23 and the conduction substrate in Figs. 3A and 3B. Also, a resistor R for self biasing is connected to the capacitor $C_1$ in parallel. The resistor R is formed outside of the source package lead 30 in Fig. 3A.

Because the size of the electrode plate 22 of the capacitor $C_1$ for self biasing is rather large, the previously mentioned problem is caused, as will be explained in more detail in conjunction with Figs. 5 through 8.

Fig. 5A is a plan view illustrating the capacitor $C_1$ for self biasing used in the device of Fig. 3A. Fig. 5B is a cross-sectional view taken along line V—V' of Fig. 5A. Referring to Figs. 5A and 5B, the electrode plate 22 formed on the dielectric film 23 is electrically connected by a wire $l_5$ to a measuring lead or a strip line 38 which is formed on another insulating film 34. The insulating film 34 is made of alumina ($Al_2O_3$) having a thickness of about 0.65 mm. The strip line 38 is made of metal of, for example nichrome-gold series. As shown in Fig. 5A, the electrode plate 22 has recesses. Each recess has a depth d of 0.4 mm and a width w of 0.3 mm. The width w of the recess is equal to the width of the portion between each recess.

Fig. 6 is an equivalent circuit diagram of the capacitor of Fig. 5. In Fig. 6, the capacity of the capacitor $C_1$ at a sufficiently low frequency is about 17.5 pF. The inductance of the wire $l_5$ is about 0.3 nH. Therefore, the reactance X due to the capacitor $C_1$ and the wire $l_5$ may be calculated as:

$$X = j\omega L + \frac{1}{j\omega c} = j\omega \times 0.3 \times 10^{-9} + \frac{1}{j\omega \times 17.5 \times 10^{-12}} (\Omega),$$

3

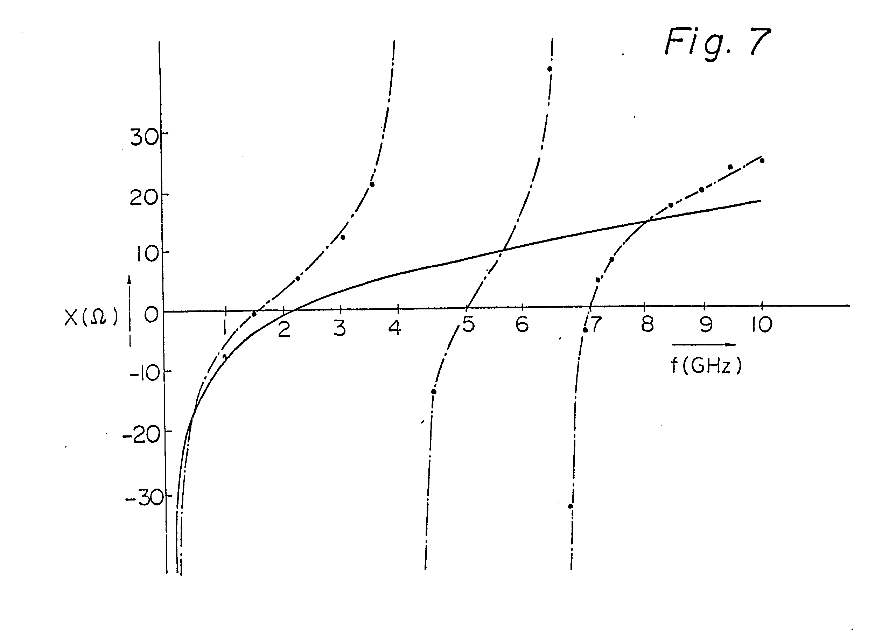

where, $\omega$ represents an angular frequency. The relation between the frequency and the reactance obtained from the above calculation is shown in Fig. 7 by a solid curve, in which, the reactance is capacitive when the frequency f is below 2.25 $GH_z$ and the reactance is inductive when the frequency f is above 2.25 GHz.

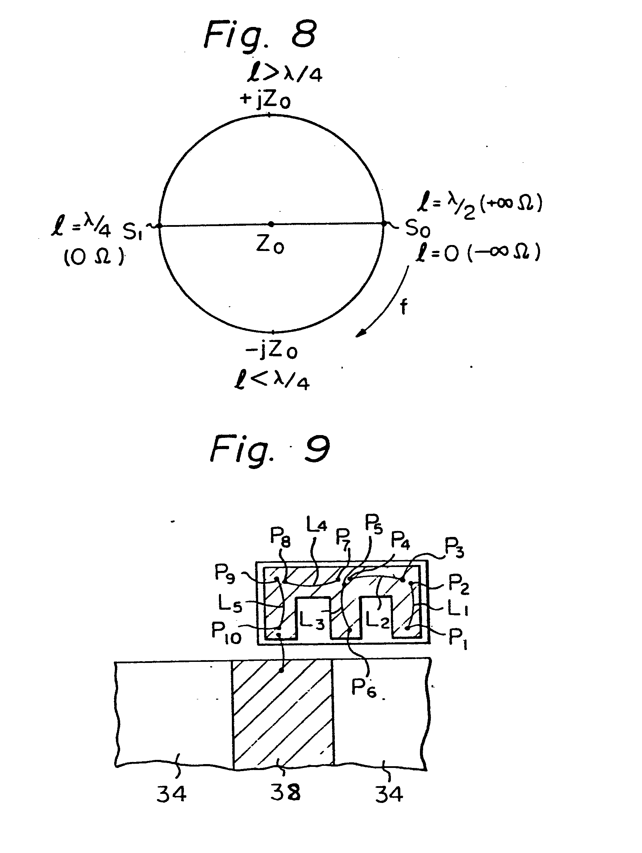

However, the practical reactance X due to the capacitor $C_1$ and the wire $l_5$ is different from the calculated reactance. The relation between the practical reactance and the frequency is illustrated in Fig. 7 by dashdot curves. This difference is caused mainly because, when the frequency is sufficiently high, the electrode plate 22 acts as a transmission line and does not act as the electrode of the capacitor $C_1$ as previously mentioned. More strictly, assume that the length of the capacitor $C_1$ is 2a+b as shown in Fig. 5A, the wavelength of the input signal applied to the gate of the transistor is $\lambda_0$, and the dielectric constant is $\varepsilon_r$. Then, the wavelength $\lambda$ of the input signal in the insulating film 23 is equal to $\lambda_0/\sqrt{\varepsilon_r}$. When the frequency of the input signal becomes higher, the wavelength will then become shorter in comparison with the side length 2a+b of the electrode plate 22 of the capacitor $C_1$. This will be easily understood from Fig. 8 which is a Smith chart of the equivalent circuit of Fig. 7. Referring to Fig. 8, when the frequency is sufficiently low so that the value $\lambda/4$ is much larger than 2a+b, the reactance is negatively infinite as illustrated at a point $S_0$, i.e., the electrode plate 22 of the capacitor $C_1$ (Fig. 5) provides an open-circuit impedance. When the frequency is relatively low so that the value $\lambda/4$ is larger than 2a+b, the reactance is capacitive, i.e., the inductance due to the electrode plate 22 can be neglected. When the frequency is increased so that the value $\lambda/4$ is equal to 2a+b, the reactance is substantially equal to zero as illustrated at a point $S_1$, i.e., the electrode plate 22 of the capacitance $C_1$ provides a short-circuit impedance. When the frequency is more increased so that the value $\lambda/4$ is smaller than 2a+b, the reactance becomes inductive. When the frequency is further increased so that the value $\lambda/2$ is equal to 2a+b, the reactance is positively infinite as illustrated at the point $S_0$, i.e., the electrode plate 22 again provides an open-circuit impedance. Accordingly, as illustrated in Fig. 7 by dash-dot curves, practical reactances repeatedly vary from negative infinite to positive infinite. This problem will be further described as follows by using practical values.

The length of the electrode plate 22 is about 3 mm (a=0.75 mm, b=1.5 mm). The dielectric constant $\varepsilon_r$ is about 140. When the measurement frequency f is 4$GH_z$, the value $\lambda_0/2$ is equal to about 36 mm, and accordingly, the value $\lambda/2=\lambda_0/2\sqrt{\varepsilon_r}$ is equal to about 3 mm which is the length of the electrode plate 22. Therefore, if the wire $l_5$ is bonded to the electrode plate 22 as illustrated in Fig. 5, the capacitor $C_1$ does not act as a capacitor but provides an open-circuit impedance.

Referring back to Fig. 4, if the source of the transistor has such an infinite inductive impedance, the transistor will cause an oscillation because currents cannot flow from the drain to the source but flow back to the gate, that is, feed-back becomes greater.

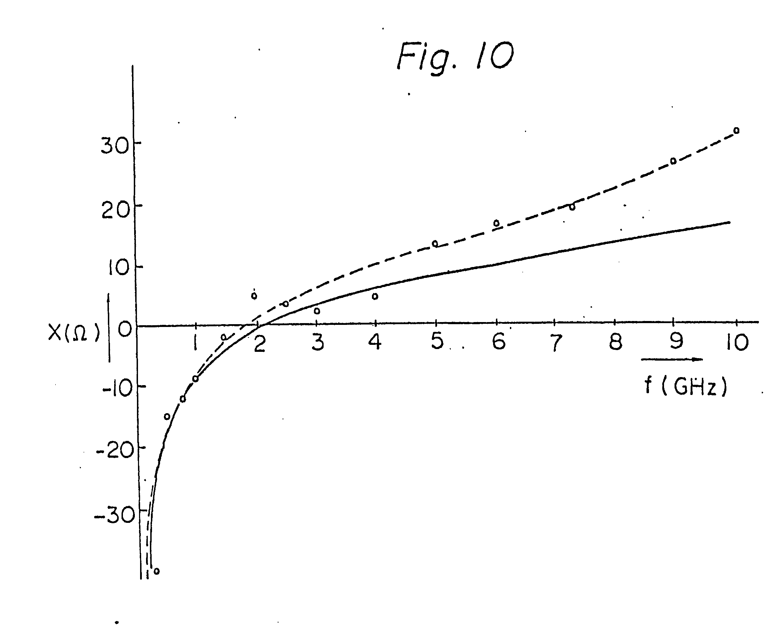

The present invention provides a capacitor in which the reactance does not change to an extremely large inductive reactance. Now, an embodiment of the present invention will be described with reference to Figs. 9 and 10.

Fig. 9 is a plan view illustrating a capacitor and a measuring lead 38 which corresponds to the conventional capacitor illustrated in Fig. 5. The difference between Fig. 5 and Fig. 9 is that, in Fig. 9, conduction wires $L_1$, $L_2$, $L_3$, $L_4$ and $L_5$ are connected on the electrode plate 22 by wire bonding at points $P_1$ through $P_{10}$. Each of the conduction wires $L_1$ through $L_5$ between the points $P_1$ and $P_2$, $P_3$ and $P_4$, $P_5$ and $P_6$, $P_7$ and $P_8$, and $P_8$ and $P_9$, respectively, is made of a gold wire having a diameter of 25 μm and has a dielectric constant $\varepsilon_r$ substantially equal to 1, because the middle portion of each of the conduction wires $L_1$ through $L_5$ is separated from the electrode plate 22. The length of each of the conduction wires $L_1$ through $L_5$ is less than $\lambda_0/2\sqrt{\varepsilon_r}$, where $\lambda_0$ represents the minimum wavelength of electric signals applied to the electrode plate 22 of the capacitor, and $\varepsilon_r$ represents the dielectric constant of the insulating film 24. In this structure we can regard the wavelength along a wire as that in air. By this construction, because many points distributed over the entire surface of the electrode plate 22 are short-circuited by the conduction wires, $L_1$ through $L_5$, each having a length less than $\lambda_0/2\sqrt{\varepsilon_r}$, the capacitor according to this embodiment does not provide such an infinite inductive impedance as in the conventional capacitor $C_1$, even when the frequency of an electric signal applied to the electrode plate 22 is high, so that the length 2a+b of the electrode plate 22 becomes larger than $\lambda_0/4\sqrt{\varepsilon_r}$. It is preferable that the length of each of the conduction wires $L_1$ through $L_5$ is less than $\lambda_0/4\sqrt{\varepsilon_r}$. Under this condition, the capacitor acts as a capacitor itself and does not show a characteristic like a transmission line.

Further, it is sufficient that the length of each of the conduction wires is less than $\lambda_0/4$. The conduction wires in Figure 9 do not overlap each other.

Fig. 10 is a graph illustrating an experimental relation between the frequency and the reactance of the capacitor of Fig. 9, in comparison with the designed relation. Referring to Fig. 10, the designed relation is again illustrated by a solid curve. The dotted curve represents the experimental relation. As will be apparent from Fig. 10, the experimental relation is quite similar to the designed relation for that capacitor.

From the foregoing description, it will be apparent that, according to the present invention, by means of a simple technique of forming short-circuits between the centre and a side or between sides of an electrode plate of a capacitor by wires, the middle portions of which are separated from the electrode plate, the capacitor can be used at a higher frequency than was possible in the prior art and thus, a capacitor useful for microwave transistor circuits can be obtained.

The present invention is not restricted to the illustrated embodiment, but may be applied to any capacitor for use at high frequencies.

# 0 044 742

## Claims

1. A capacitor element for microwave electric signals, comprising a dielectric layer (23, Fig. 5) having two main surfaces, an electrode (22) on one of the main surfaces and a conductive layer (24) on the other main surface, and including at least one conductive wire ($L_1$) joining two points ($P_1$, $P_2$) on the said electrode; characterised in that the electrode extends continuously and in a straight line between the two points joined by the wire, the wire being spaced from the electrode between the said two points and having a length less than $\lambda_0/2\sqrt{\varepsilon_r}$, where $\lambda_0$ is the minimum wavelength for received signals and $\varepsilon_r$ is the dielectric constant of the dielectric layer, whereby the tendency of the microwave capacitor to act as a transmission line is reduced.

2. A capacitor element as set forth in claim 1, wherein the length of each wire ($L_1$, $L_2$, . . ., $L_5$) joining the two points ($P_1$, $P_2$; $P_3$, $P_4$; . . .; $P_9$, $P_{10}$) is less than $\lambda_0/4\sqrt{\varepsilon_r}$.

3. A capacitor element as set forth in claim 1 or 2, wherein the length of each wire is less than $\lambda_0/4$.

4. A capacitor element in accordance with claim 1, 2 or 3, comprising a plurality of wires each connecting a different pair of points on the electrode, without overlapping one another, the plurality of points being distributed over the entire surface of the electrode.

5. A capacitor element as set forth in any one of the preceding claims, wherein each of the said wires is connected by wire bonding to the two points which it joins.

6. A capacitor element as set forth in any one of the preceding claims, in a circuit wherein the capacitor element is for self-biasing and is connected to the source electrode of a high-power GaAs FET.

## Patentansprüche

1. Kondensatorelement für elektrische Mikrowellensignale, mit einer dielektrischen Schicht (23, Fig. 5), die zwei Hauptoberflächen hat, eine Elektrode (22) auf einer der Hauptoberflächen und einer leitenden Schicht (24) auf der anderen Hauptoberfläche, und mit wenigstens einem leitenden Draht ($L_1$), der die beiden Punkte ($P_1$, $P_2$) auf der genannten Elektrode verbindet; dadurch gekennzeichnet, daß die Elektrode sich kontinuierlich und in einer geraden Linie zwischen den beiden Punkten, die durch den Draht verbunden sind, erstreckt, der Draht in einem Abstand von der Elektrode zwischen den genannten beiden Punkten angeordnet ist und eine Länge hat, die kleiner als $\lambda_0/2\sqrt{\varepsilon_r}$ hat, wobei $\lambda_0$ die minimale Wellenlänge für empfangene Signale und $\varepsilon_r$ die Dielektrizitätskonstante der dielektrischen Schicht ist, wodurch die Tendenz des Mikrowellenkondensators, als Übertragungsleitung zu wirken, reduziert ist.

2. Kondensatorelement nach Anspruch 1, bei dem die Länge von jedem Draht ($L_1$, $L_2$, . . ., $L_5$), der die beiden Punkte ($P_1$, $P_2$; $P_3$, $P_4$; . . .; $P_9$, $P_{10}$) verbindet, kleiner als $\lambda_0/4\sqrt{\varepsilon_r}$ ist.

3. Kondensatorelement nach Anspruch 1 oder 2, bei dem die Länge von jedem Draht kleiner als $\lambda_0/4$ ist.

4. Kondensatorelement nach Anspruch 1, 2 oder 3, mit einer Vielzahl von Drähten, die jeweils ein verschiedenes Paar von Punkten auf der Elektrode verbinden, ohne einander zu überlappen, wobei die Vielzahl von Punkten über der gesamten Oberfläche der Elektrode verteilt ist.

5. Kondensatorelement nach einem der vorhergehenden Ansprüche, bei dem jeder der genannten Drähte durch Drahtbonding mit den beiden Punkten, welche er miteinander verbindet, verbunden ist.

6. Kondensatorelement nach einem der vorhergehenden Ansprüche, in einer Schaltung, bei der das Kondensatorelement selbstvorspannend und mit der Source-Elektrode eines Hochleistungs-GaAs-FET verbunden ist.

## Revendications

1. Elément condensateur pour signaux électriques micro-onde, comprenant une couche diélectrique (23, figure 5) possédant deux surfaces principales, une électrode (22) sur l'une des surfaces principales et une couche conductrice (24) sur l'autre surface principale, et comportant au moins un câble conducteur ($L_1$) réunissant deux points ($P_1$, $P_2$) situés sur ladite électrode; caractérisé en ce que l'électrode s'étend de manière continue et en ligne droite entre les deux points réunis par le câble, le câble étant écarté l'électrode entre lesdits deux points et ayant une longueur inférieure à $\lambda_0/2\sqrt{\varepsilon_r}$, où $\lambda_0$ est la longueur d'onde minimale des signaux reçus et $\varepsilon_r$ est la constante diélectrique de la couche diélectrique, si bien qu'on réduit la tendance du condensateur micro-onde à se comporter comme une ligne de transmission.

2. Elément condensateur selon la revendication 1, où la longueur de chaque fil ($L_1$, $L_2$, . . ., $L_5$) réunissant les deux points ($P_1$, $P_2$; $P_3$, $P_4$; . . ., $P_9$, $P_{10}$) est inférieure à $\lambda_0/4\sqrt{\varepsilon_r}$.

3. Elément condensateur selon la revendication 1 ou 2, où la longueur de chaque câble est inférieure à $\lambda_0/4$.

4. Elément condensateur selon la revendication 1, 2 ou 3, comprenant plusieurs câbles connectant chacun une paire différente de points situés sur l'électrode, sans chevauchement mutuel, les différents points étant répartis sur toute la surface de l'électrode.

5. Elément condensateur selon l'une quelconque des revendications précédentes, où chacun desdits câbles est connecté par soudage du câble aux deux points qu'il réunit.

6. Elément condensateur selon l'une quelconque des revendications précédentes, dans un circuit où l'élément condensateur sert à l'autopolarisation et est connecté à l'électrode de source d'un transistor à effet de champ en GaAs pour haute puissance.

5

# Fig. 1

$TL_1$   $\ell_1$   $\ell_2$   $TL_2$

C

# Fig. 2

$TL_1$   12   C   10   18   $TL_2$

16

14

Fig. 3A

Fig. 3B

Fig. 4

26 —o— $l_3$ — $l_4$ — D —o 28

$C_2$

G S —o 30

$C_1$ R

Fig. 5A

Fig. 5B

b

$l_5$

$l_5$

34 38 34

Fig. 6

$l_5$

$C_1$

Fig. 7

0 044 742

## Fig. 8

$l > \lambda/4$

$+jZ_0$

$l = \lambda/4$ $S_1$
$(0 \, \Omega)$

$Z_0$

$l = \lambda/2 \, (+\infty \, \Omega)$
$S_0$
$l = 0 \, (-\infty \, \Omega)$

$f$

$-jZ_0$

$l < \lambda/4$

## Fig. 9

34    38    34

Fig. 10